# EUROPÄISCHE PATENTSCHRIFT

(11) **EP 0 912 268 B1**
(45) Veröffentlichungstag und Bekanntmachung des Hinweises auf die Patenterteilung: **31.07.2002**
(21) Anmeldenummer: 97925957.9
(22) Anmeldetag: 28.05.1997
(51) Int. Cl.: B21D 53/84, F16H 53/02, B21D 39/06

(54) **VERFAHREN UND EINRICHTUNG ZUM FÜGEN UND PRÜFEN**
METHOD AND APPARATUS FOR JOINING AND INSPECTING
PROCEDE ET DISPOSITIF D'ASSEMBLAGE ET DE CONTROLE

(30) Priorität: 26.06.1996 DE 19625554
(43) Veröffentlichungstag der Anmeldung: 06.05.1999
(73) Patentinhaber: Kühl, Hans, D-73207 Plochingen (DE)
(72) Erfinder: Kühl, Hans, D-73207 Plochingen (DE)
(74) Vertreter: Dahmen, Toni Dipl.-Ing.
(86) Internationale Anmeldenummer: EP9702755
(87) Internationale Veröffentlichungsnummer: WO9749512

(56) Entgegenhaltungen:
- EP-A- 0 592 068
- WO-A-96/19685
- DE-A- 3 302 762
- US-A- 4 575 913

## Beschreibung

Die Erfindung betrifft ein Verfahren zum drehfesten Verbinden einer Welle mit mindestens einem auf der Welle angeordneten Teil, bei dem das Teil mit Fügespiel auf die Welle aufgefädelt und auf dieser in bestimmter Stellung durch Aufheben des Fügespiels befestigt wird, sowie eine Einrichtungen, mittels deren dieses Verfahren ausgeführt werden kann nach dem Oberbegriff der Ansprüche 1 und 10.

Es ist bekannt, bspw. Nocken auf Wellen durch Aufschrumpfen oder durch Aufweiten der rohrförmigen Welle zu befestigen. Zum Aufschrumpfen (DE 33 01 749 A) kann ein erwärmter Nocken auf die Welle geschoben werden und schrumpft beim Abkühlen durch Zusammenziehen auf dieser fest. Eine rohrförmige Welle kann durch Anlegen entsprechend hohen Innendruckes (DE 38 03 687 A) oder mittels eines durch die hohle Welle gezogenen Aufweitedornes (DE 33 02 762 A1, US 4,575,913) zur kraftschlüssigen Anlage an die Bohrungen auf der Welle angeordneter Nocken aufgeweitet werden.

Es ist auch schon vorgeschlagen worden (DE 36 38 310 A), eine Welle mit im Querschnitt unrunder Außenkontur zu verwenden, auf die Nocken mit entsprechend unrunder Innenkontur befestigt werden. Das Befestigen der Nocken auf der Polygonwelle soll durch Verspannungen der Polygonform erfolgen, die durch Aufweiten der Polygonflächen oder durch Zusammendrücken der Polygonschultern beim Aufschieben der Nocken und anschließendem Rückfedern des Polygonrohres bewirkt werden sollen.

Ferner ist schon vorgeschlagen worden (DE 25 46 802 C, EP 0 592 068 A1, die als nächstliegender Stand der Technik augesehen wird, den Sitz der Nocken unrund auszuführen und die Wand der rohrförmigen Welle durch Erzeugen hohen Druckes in deren Innenraum in die unrunden Sitze der Nocken hinein zu verformen.

Es hat sich jedoch gezeigt, daß der Reibschluß, der für die Übertragung der beim Betrieb der Welle auftretenden Kräfte erforderlich ist, nicht stets mit der erforderlichen Sicherheit erreicht wird. Das Aufweiten einer rohrförmigen Welle durch Innendruck erfordert zum Aufbau des sehr hohen erforderlichen Druckes erhebliche Zeit, so daß die Taktzeit für diese Fertigungsweise und damit deren Kosten hoch sind.

Der Erfindung war daher die Aufgabe gestellt, eine einfache und wohlfeile Möglichkeit anzugeben, wie Teile wie Nocken, Scheiben, Zahnräder und dergleichen sicher, d.h. beim Anliegen maximaler vorgesehener Momente gegen Verdrehen gesichert, auf Wellen befestigt werden können. Sie löst diese Aufgabe mit den in den Anprüchen 1 und 10 genannten Merkmalen.

Dadurch, daß die für das Verdrehen eines Teils in die vorgesehene Winkelstellung auf der Welle erforderliche Kraft gemessen wird, die Möglichkeit geboten, durch Vergleich der gemessenen Kraft mit einem Sollwert zu prüfen, ob der beabsichtige feste Sitz erzielt worden ist. Da das Verdrehen in die vorgesehene Winkelstellung an allen Teilen erfolgt, wird die Prüfung auf Erreichen des angestrebten Festsitzes an allen Teilen durchgeführt, die Prüfung ist also nicht nur eine 100%ige, sondern auch zerstörungsfrei.

Um ein auf der Welle zu befestigendes Teil auf diese aufbringen zu können, muß ein Fügespiel vorhanden sein. Da der zum Befestigen dienende Reibschluß zwischen den Keilen auf den Sitzflächen erst aufgebaut werden kann, wenn dieses Fügespiel aufgehoben ist, muß dies vorab erfolgen. Hierfür sind mehrere Möglichkeiten gegeben:

Wenn die Keile nicht nur im Teil, sondern auch auf der Welle bereits vorhanden sind, kann das Drehen des Teils in die vorgesehene Winkelstellung auf der Welle bzw. die hierzu dienende Vorrichtung auch zum Aufheben des Fügespiels dienen, indem das Teil zunächst bis zum Anliegen der Rückenflächen der Keile verdreht wird - Ansprüche 3 und 15.

Das Teil kann durch thermisches Schrumpfen verengt, also aufgeschrumpft werden - Anspruch 4.

Eine hohle Welle kann aufgeweitet werden - entweder durch Aufbau eines entsprechend hohen Druckes in ihrem Inneren oder mittels eines durch sie hindurchgezogenen Aufweitedornes - Ansprüche 5, 6 und 11 bzw. 7 und 12.

Im Falle des Aufweitens einer hohlen Welle bietet sich die Möglichkeit, von einer außen glatten, zylindrischen Welle auszugehen und die Keile auf ihr dadurch zu formen, daß sie beim Aufweiten in die Keile des Teils eingepreßt wird - Ansprüche 8, 13 und 14. Das Aufweiten der Hohlwelle bzw. die hierfür vorgesehenen Vorrichtungen erfüllen somit eine doppelte Funktion.

Durch das Aufheben des Fügespieles wird eine quasiformschlüssige Verbindung zwischen dem Teil und der Welle erzielt. Einem weiteren gegenseitigen Verdrehen setzen die beiden Teile durch das zunehemde Aufeinander-Aufgleiten der Rückenflächen der Keile zunehmenden Widerstand entgegen. Dadurch, daß das Teil in die vorgesehene Winkelstellung gedreht wird, wird der Reibschluß auf den für das zu übertragende Moment erforderlichen Wert erhöht. Vorteilhafterweise ist die Steigungsrichtung der Keile so gewählt, daß dieses Verdrehen in die vorgesehene Stellung in derjenigen Richtung erfolgt, in der das Teil im Betrieb normalerweise Moment oder - bei Übertragen von Momenten in beiden Drehrichtungen - das höhere von zwei Momenten unterschiedlicher Höhe zu übertragen hat.

Wenn das Teil auf die Welle aufgeschrumpft oder die Welle aufgeweitet wird, genügt es in vielen Fällen, wenn nur das Teil das Keilflächen-Profil aufweist. Beim Aufschrumpfen des Teils auf die Welle oder beim Aufweiten der Welle in die Bohrung des Teils hinein wird die Welle in die Profilform des Teils gepreßt und dabei seinerseits mit dem komplementären Keilflächen-Profil versehen.

Das Aufweiten der Welle kann mittels der bekannten Hochdruck-Innenaufweitung mittels Druckmedium oder durch Hindurchbewegen eines Aufweitdornes durch die Welle erfolgen. Ein besonders wirksames Festsetzen des Teils auf der Welle erfolgt dabei dann, wenn auch der Aufweitdorn ein angepaßtes Keilprofil aufweist und in winkelgerechter Lage durch die Welle bewegt, vorzugsweise gezogen wird, in einer Lage also, in der er mit seinen Keilen die Keile der Welle in die Täler zwischen den Keilen des Teils drückt - Ansprüche 8 und 14.

In den Figuren der Zeichnung ist die Erfindung am Beispiel einer Nockenwelle verdeutlicht. Sie ist jedoch beim Befestigen beliebiger Teile wie bspw. auch Zahnrädern, Riemenscheiben, Kurbelarmen usw. auf Wellen anwendbar. Es zeigen
Fig. 1 gefügte Welle und Nocken im Querschnitt durch die Welle;
Fig. 2 das Aufweiten der Welle mittels Innenhochdruckverformung;
Fig. 3 das Aufweiten der Welle mittels Dorn;
Fig. 4 das Drehen des Nockens in die vorgesehene Stellung.

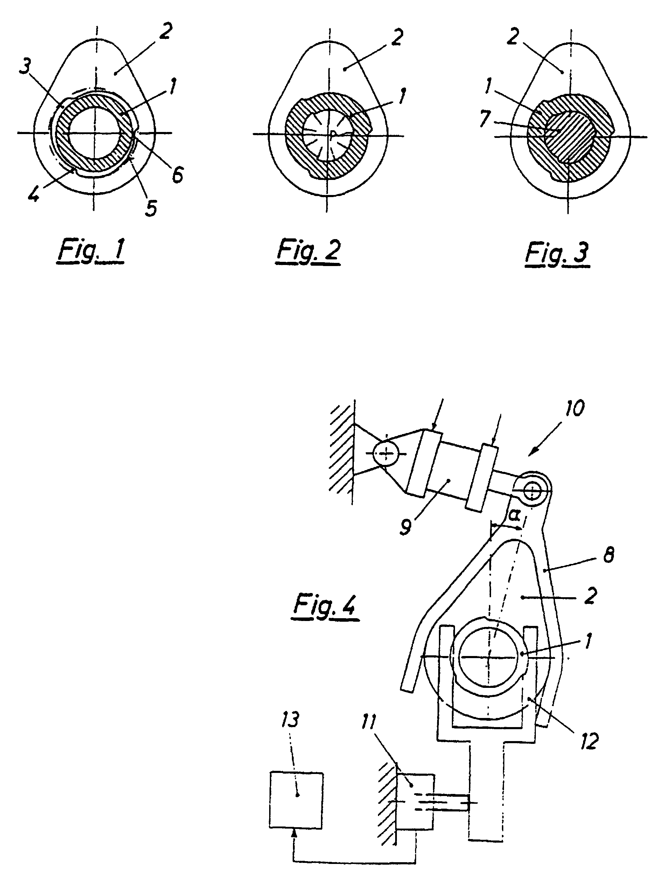

Fig. 1 zeigt eine glatte, hohle Welle 1 ohne Profilierung auf der Außenfläche. Dagegen weist ein auf die Welle 1 augefädelter Nocken 2 in seiner Bohrung 3 Kreiskeil-Profilierung auf.

Diese Kreiskeilprofilierung besteht aus Keilen 4, die sich über eine gedachte, zylindrische Bezugsfläche 5 erheben und steil wieder auf sie abfallen. Die dargestellten drei Keile 4 sind um je 120° um den Umfang gegeneinander versetzt. Zwischen der Welle 1 und dem aufgefädelten Nocken 2 besteht ein Fügespalt 6.

Die Steigung der Keile 4, die hier der Deutlichkeit halber stark überhöht dargestellt ist, beträgt zwischen 1:50 und 1:200, bevorzugt etwa 1:100.

Zum Befestigen des Nockens 2 auf der Welle 1 wird in der Ausführungsform der Fig. 2 die hohle Welle innen mit einem Fluid mit sehr hohem Druck beaufschlagt - dieses Innenhochdruck-Verformungsverfahren ist bekannt und daher hier nicht näher beschrieben. Durch diesen hohen Druck wird die Welle 1 unter bleibender Verformung aufgeweitet, wobei sie in die Täler zwischen den Keilen 4 im Nocken 2 fließt.

In der Ausführungsform der Fig. 3 wird zum Befestigen des Nockens 2 ein Dorn 7 durch die Welle 1 gezogen, durch den die Welle ebenfalls unter bleibender Verformung aufgeweitet wird. Der Dorn 7 kann kreisrunde Umfangsfläche haben. Vorteilhafterweise weist er jedoch ebenfalls die Kreiskeil-Profilierung des Nockens 2 auf und wird in einer Winkelstellung durch die Welle gezogen, in der die auf ihm angebrachten Keile den Tälern zwischen den Keilen 4 im Nocken 2 gegenüberstehen. Dadurch wird das durch den Dorn 7 verdrängte Material der Welle 1 gezielt in die Täler zwischen den Keilen 4 des Nockens 2 gedrückt.

Nach Fig. 4 wird ein so auf der Welle 1 befestigter Nocken 2 mittels einer den Nocken erfassenden, nur ganz schematisch angedeuteten, einen Nockengreifer 8 und ein fluidisches Arbeitselement 9 aufweisenden Schwenkvorrichtung 10 um den Schwenkwinkel alpha in die vorgesehene Winkelstellung auf der Welle gedreht. Dabei gleiten die Rücken der Keile 4 des Nockens 2 und der auf der Welle 1 geformten Keile aneinander auf. Dadurch erhöht sich die Flächenpressung zwischen diesen Rücken bis zur Verformung der Teile und unter starkem Erhöhen des Reibschlusses zwischen den Teilen.

Erfindungsgemäß wird die zum In-Stellung-Drehen des Nockens 2 auf der Welle 1 erforderliche Kraft mittels einer Meßvorrichtung 11 in Form bspw. einer Kraftmeßdose, die von einer schwenkbar gelagerten Gegenhaltevorrichtung 12 für die Welle 1 beaufschlagt wird, erfaßt und in einem Vergleichsgerät 13 mit einem vorgegebenen Sollwert verglichen. Nur wenn dieser Sollwert der Kraft zum Verschwenken des Nockens mindestens erreicht wird, genügt das gefertigte Teil den Anforderungen. Es versteht sich, daß das Ergebnis der Wertevergleichs im Vergleichsgerät 13 angezeigt wird.

Das Verdrehen der Nocken 2 in die vorgesehene Winkelstellung könnte gleichzeitig an allen Nocken erfolgen. Dann würde jedoch die Meßvorrichtung 11 die zum gemeinsamen Verdrehen aller Nocken erforderliche Kraft erfassen, ein nicht ausreichendes Befestigen eines der Nocken könnte dabei unbemerkt bleiben. Bevorzugt ist daher vorgesehen, das Verdrehen der Nocken 2 und das Erfassen des dabei jeweils auftretenden Momentes jeweils an jedem Nocken gesondert vorzunehmen.

An Teilen, die keine bestimmte Winkelstellung zur Welle 1 aufweisen müssen, wie bspw. Zahnräder oder Scheiben, kann ein Verdrehen und damit Erhöhen des Reibschlusses bis zum Erreichen eines vorgesehenen Haltemomentes erfolgen. Das Erreichen dieses Haltemomentes kann durch die Meßvorrichtung 11 und das Vergleichgerät 13 erfaßt werden, das dann die Schwenkvorrichtung 10 entsprechend steuern kann.

In Abänderung der dargestellten Verfahrensweise kann anstelle der glatten Weile 1 auch eine Welle eingesetzt werden, die auf ihrer Außenfläche ebenfalls eine auf die Kreiskeil-Profilierung des Nockens 2 abgestellte Profilierung aufweist. Beim Aufweiten dieser Welle wird dann nur das notwendige Fügespiel zwischen den Teilen aufgehoben, ein Verformen der Welle in die Täler zwischen den Keilen 4 in der Bohrung 3 des Nockens hinein ist nicht erforderlich.

Die Anzahl der Keile 4 der Kreiskeil-Profilierung richtet sich nach dem Einsatzzweck des Aggregates. Wenn es hierbei auf eine hohe Zentriergenauigkeit ankommt, werden vorteilhafterweise drei im gleichen gegenseitigen Abstand angeordnete Nocken vorgesehen. Dagegen ergibt sich die zweckmäßige Anzahl von Keilen bspw. bei einer Nockenwelle für einen Verbrennungsmotor vorteilhafterweise nach der Anzahl der Zylinder, die der Motor aufweist, für den die Nockenwelle bestimmt ist. So weisen für einen Vierzylindermotor bestimmte Nocken vorzugsweise vier, für einen Sechszylindermotor sechs Keile auf.

### Bezugszahlenliste

- 1: Welle
- 2: Nocken
- 3: Bohrung
- 4: Keile
- 5: Bezugsfläche
- 6: Fügespalt
- 7: Dorn
- 8: Nockengreifer
- 9: Arbeitselement
- 10: Schwenkvorrichtung
- 11: Meßvorrichtung
- 12: Gegenhaltevorrichtung
- 13: Vergleichsgerät

## Patentansprüche

1. Verfahren zum drehfesten Verbinden einer Welle mit mindestens einem auf der Welle angeordneten Teil, bei dem das Teil mit Fügespiel auf die Welle aufgefädelt und auf dieser in bestimmter Stellung durch Aufheben des Fügespiels befestigt wird, **dadurch gekennzeichnet,**
- **daß** mindestens die Fläche, mit der das Teil auf der Welle sitzt, ein Profil in Form mehrerer, vorzugsweise um gleiche Winkel um den Umfang versetzter, allmählich über eine zylindrische Bezugsfläche nach innen ansteigender und wieder auf diese abfallender, gekrümmter Keilfächen aufweist,
- **daß** ein Fügespiel zwischen der Welle und dem Teil aufgehoben,
- **daß** das Teil nach Aufheben des Fügespiels zum Befestigen in die beabsichtigte Stellung gedreht wird.

2. Verfahren nach Anspruch 1, **dadurch gekennzeichnet, daß** die für das Verdrehen des Teils in die beabsichtigte Stellung erforderliche Kraft gemessen wird.

3. Verfahren nach Anspruch 1, **dadurch gekennzeichnet, daß** sowohl das Teil auf seiner Sitzfläche auf der Welle als auch die Welle aneinander angepaßte Profile aufweisen.

4. Verfahren nach einem der vorhergehenden Ansprüche, **dadurch gekennzeichnet, daß** das Teil auf die Welle aufgeschrumpft wird.

5. Verfahren nach einem oder mehreren der vorhergehenden Ansprüche, **dadurch gekennzeichnet, daß** die Welle hohl ist und aufgeweitet wird.

6. Verfahren nach Anspruch 5, **dadurch gekennzeichnet, daß** das Aufweiten der Welle durch Anlegen sehr hohen fluidischen Druckes an deren Inneres erfolgt.

7. Verfahren nach Anspruch 5, **dadurch gekennzeichnet, daß** das Aufweiten der Welle durch Hindurchbewegen eines Dornes mit den Innendurchmesser der Welle übersteigendem Außendurchmesser erfolgt.

8. Verfahren nach Anspruch 7, **dadurch gekennzeichnet, daß** der Dorn ein dem Profil des Sitzes des Teils auf der Welle angepaßtes Profil aufweist und winkelgerecht durch die hohle Welle bewegt wird.

9. Verfahren nach Anspruch 1, **dadurch gekennzeichnet, daß** die gemessene Größe der Kraft zum Drehen des Teils in seine vorgesehene Stellung mit einem Sollwert verglichen wird.

10. Einrichtung zum drehfesten Verbinden einer Welle (1) mit mindestens einem auf der Welle angeordneten Teil (2), wobei Welle und Teil mindestens auf einem Abschnitt ihrer Berührungsflächen aufeinander abgestimmte Profile in Form mehrerer, vorzugsweise um gleiche Winkel um den Umfang versetzter, allmählich über eine zylindrische Bezugsfläche (5) ansteigender und wieder auf diese abfallender, gekrümmter Keile (4) aufweisen, und wobei das Teil mit Fügespiel auf die Welle aufgefädelt und auf dieser in bestimmter Stellung unter Aufheben des Fügespiels befestigt wird, wobei
- eine Vorrichtung zum Aufheben des Fügespiels (6) zwischen dem Teil (2) und der Welle (1), sowie
- eine Vorrichtung (10) zum Verdrehen des fügespielfrei auf der Welle sitzenden Teils gegen die zunehmende Reibkraft der Keile (4) aneinander in die vorgesehene Winkelstellung auf der Welle vorgesehen sind, **dadurch gekennzeichnet, daß**
- eine Meßvorrichtung (11) und ein Vergleichsgerät (13), mittels deren die zum Verdrehen des Teiles (2) in die vorgesehene Winkelstellung auf der Welle (1) erforderliche Kraft erfaßt und mit einem Sollwert dieser Kraft verglichen werden kann,
vorgesehen sind.

11. Einrichtung nach Anspruch 10, **dadurch gekennzeichnet, daß** die Vorrichtung zum Aufheben des Fügespiels (6) zwischen dem Teil (2) und der Welle (1) zum Aufbau eines die Welle in die Sitzfläche des Teiles hinein verformenden fluidischen Druckes in der Welle geeignet ist.

12. Einrichtung nach Anspruch 10, **dadurch gekennzeichnet, daß** die Vorrichtung zum Aufheben des Fügespiels (6) zwischen dem Teil (2) und der Welle (1) einen durch die Welle bewegbaren, die Welle in die Sitzfläche des Teiles hinein verformenden Aufweitedorn (7) aufweist.

13. Einrichtung nach Anspruch 11 oder 12, **dadurch gekennzeichnet, daß** die Vorrichtung (7) zum Aufheben des Fügespiels (6) zugleich mit dem Aufheben des Fügespiels zum Einprägen der hohlen Welle (1) in die Nocken (4) des Teils (2) ausgebildet ist.

14. Einrichtung nach Anspruch 12 und 13, **dadurch gekennzeichnet, daß** der Aufweitedorn (7) auf seiner wirksamen Außenfläche ein dem Profil der Nocken (4) entsprechendes Profil aufweist und mittels seiner Einrichtung in der der Stellung der Nocken im Teil (2) entsprechender Stellung durch die Welle (1) bewegbar ist.

15. Einrichtung nach Anspruch 10, **dadurch gekennzeichnet, daß** die Vorrichtung zum Aufheben des Fügespiels (6) zwischen dem Teil (2) und der Welle (1) die auch zum Verdrehen des auf der Welle sitzenden Teils in die vorgesehene Winkelstellung dienende Vorrichtung (10) ist.

## Claims

1. Method for the rotationally fixed connection of a shaft with at least one component positioned on the shaft, in which the component is passed onto the shaft with some clearance and then attached thereto in a determined position by eliminating the clearance,
**characterised in that**
- at least the surface upon which the component is seated against the shaft has a profile in the shape of several curved ramp surfaces, preferably distributed around the circumference at equal angular intervals, which gradually rise inwards above a cylindrical reference surface and then fall back to its level,
- a clearance between the shaft and the component is eliminated,
- once the clearance has been eliminated, the component is rotated to its intended position in order to fix it therein.

2. Method according to Claim 1,
**characterised in that**
the force required to rotate the component to its intended position is measured.

3. Method according to Claim 1,
**characterised in that**
both the component, on its seating surface on the shaft, and the shaft itself have profiles adapted to one another.

4. Method according to any of the preceding claims,
**characterised in that**
the component is heat-shrunk onto the shaft.

5. Method according to one or more of the preceding claims,
**characterised in that**
the shaft is hollow and is expanded.

6. Method according to Claim 5,
**characterised in that**
the shaft is expanded by the application of very high fluidic pressure on the inside thereof.

7. Method according to Claim 5,
**characterised in that**
the shaft is expanded by moving into it a mandrel having an outside diameter larger than the inside diameter of the shaft.

8. Method according to Claim 7,
**characterised in that**
the mandrel has a profile adapted to the profile of the seating of the component on the shaft, and is moved through the hollow shaft at the correct angle.

9. Method according to Claim 1,
**characterised in that**
the measured size of the force required to rotate the component to its intended position is compared with a nominal value.

10. Device for the rotationally fixed connection of a shaft (1) with at least one component (2) positioned on the shaft, such that at least along a section of their contact surfaces the shaft and the component have profiles adapted to one another in the form of several curved ramps (4), preferably distributed around the circumference at equal angular intervals, which gradually rise above a cylindrical reference surface (5) and then fall back to its level, and such that the component is passed onto the shaft with some clearance and then attached thereto in a determined position by eliminating the said clearance, such that
- a device for eliminating the clearance (6) between the component (2) and the shaft (1), and
- a device (10) for rotating the clearance-free component seated on the shaft against the increasing friction force of the ramps (4) against one another to its intended angular position on the shaft are provided,
**characterised in that**
- a measurement device (11) and a comparison instrument (13) are provided, by means of which the force required to rotate the component (2) to its intended angular position on the shaft (1) can be determined and compared with a nominal value of the said force.

11. Device according to Claim 10,
**characterised in that**
the device for eliminating the clearance (6) between the component (2) and the shaft (1) is suitable for building up a fluidic pressure inside the shaft, sufficient to force the shaft into contact with the seating surface of the component

12. Device according to Claim 10,
**characterised in that**
the device for eliminating the clearance (6) between the component (2) and the shaft (1) comprises an expansion mandrel (7) that can be moved through the shaft to force it against the seating surface of the component.

13. Device according to Claims 11 or 12,
**characterised in that**
the device for eliminating the clearance (6) is designed to press the hollow shaft (1) into the ramps (4) of the component (2) as it eliminates the clearance.

14. Device according to Claims 12 and 13,
**characterised in that**
the expansion mandrel (7) has on its active outside surface a profile corresponding to that of the ramps (4) and can be moved through the shaft (1) by means of its mechanism in a position corresponding to that of the ramps in the component (2).

15. Device according to Claim 10,
**characterised in that**
the device for eliminating the clearance (6) between the component (2) and the shaft (1) is at the same time the device (10) that serves to rotate the component seated on the shaft to its intended angular position.

## Revendications

1. Procédé pour relier solidairement en rotation un arbre à au moins une pièce montée sur l'arbre, selon lequel la pièce est emmanchée sur l'arbre avec un jeu d'assemblage et est fixée sur cet arbre dans une position déterminée par suppression du jeu d'assemblage, **caractérisé en ce que**
- au moins la surface, avec laquelle la pièce est en appui sur l'arbre possède un profil sous la forme de plusieurs surfaces en coin cintrées, décalées de préférence sur des angles identiques sur la périphérie, qui remontent graduellement vers l'intérieur au-dessus d'une surface de référence cylindrique et retombent à nouveau jusqu'à cette surface,
- qu'on supprime un jeu d'assemblage entre l'arbre et la pièce,
- qu'après avoir supprimé le jeu d'assemblage, on fait tourner la pièce pour la fixer dans la position envisagée.

2. Procédé selon la revendication 1, **caractérisé en ce qu'**on mesure la force nécessaire pour faire tourner la pièce pour l'amener dans la position envisagée.

3. Procédé selon la revendication 1, **caractérisé en ce qu'**aussi bien la pièce sur sa surface d'appui sur l'arbre, ainsi que l'arbre possèdent les profils qui sont adaptés entre eux.

4. Procédé selon l'une des revendications précédentes, **caractérisé en ce qu'**on emmanche par frettage la pièce sur l'arbre.

5. Procédé selon une ou plusieurs des revendications précédentes, **caractérisé en ce que** l'arbre est creux et qu'on l'élargit.

6. Procédé selon la revendication 5, **caractérisé en ce que** l'élargissement de l'arbre s'effectue par application d'une pression fluidique très élevée à l'intérieur de l'arbre.

7. Procédé selon la revendication 5, **caractérisé en ce que** l'élargissement de l'arbre est réalisé par déplacement d'un mandrin possédant un diamètre extérieur supérieur au diamètre intérieur de l'arbre.

8. Procédé selon la revendication 7, **caractérisé en ce que** le mandrin possède un profil adapté au profil de la zone d'appui de la pièce sur l'arbre et qu'on déplace le mandrin selon un angle approprié à travers l'arbre creux.

9. Procédé selon la revendication 1, **caractérisé en ce que** l'on compare l'intensité mesurée de la force servant à faire tourner la pièce pour l'amener dans sa position prévue à une valeur de consigne.

10. Dispositif pour relier solidairement en rotation un arbre (1) à au moins une pièce (2) disposée sur l'arbre, dans lequel l'arbre et la pièce possèdent au moins sur une partie de leurs surfaces de contact, des profils qui sont accordés entre eux et se présentent sous la forme de plusieurs coins cintrés (4), qui sont décalés de préférence du même angle sur la périphérie et éventuellement remontent graduellement au-dessus d'une surface de référence cylindrique (5) et redescendent à nouveau jusqu'à cette surface, et dans lequel la pièce est emmanchée avec un jeu d'assemblage sur l'arbre et est fixée sur ce dernier dans une position prédéterminée moyennant la suppression du jeu d'assemblage, et dans lequel il est prévu
- un dispositif pour supprimer le jeu d'assemblage (6) entre la pièce (2) et l'arbre (1), ainsi
- qu'un dispositif (10) pour faire tourner la pièce, qui est en appui sur l'arbre sans jeu d'assemblage, à l'encontre de la force de frottement, qui augmente, des coins (4), l'un contre l'autre, pour l'amener dans la position angulaire prédéterminée sur l'arbre,
**caractérisé en ce que**
- il est prévu un dispositif de mesure (11) et un appareil comparateur (15), à l'aide desquels la force nécessaire pour faire tourner la pièce (2) pour l'amener dans la position angulaire prévue sur l'arbre (1) est détectée et peut être comparée à une valeur de consigne de cette force.

11. Dispositif selon la revendication 10, **caractérisé en ce que** le dispositif servant à supprimer le jeu d'assemblage (6) entre la pièce (2) et l'arbre (1) est approprié pour établir dans l'arbre une pression fluidique qui déforme l'arbre intérieurement au niveau de la surface d'appui de la pièce.

12. Dispositif selon la revendication 10, **caractérisé en ce que** le dispositif servant à supprimer le jeu d'assemblage (6) entre la pièce (2) et l'arbre (1) possède un mandrin d'élargissement (7), qui est déplaçable à travers l'arbre et qui déforme l'arbre intérieurement dans la zone d'appui de la pièce.

13. Dispositif selon la revendication 11 ou 12, **caractérisé en ce que** le dispositif (7) servant à supprimer le jeu d'assemblage (6) est agencé pour enfoncer l'arbre creux (1) dans les cames (4) de la pièce (2) en même temps que s'effectue la suppression du jeu d'assemblage.

14. Dispositif selon les revendications 12 et 13, **caractérisé en ce que** le mandrin d'élargissement (7) comporte, sur sa surface extérieure active, un profil qui correspond au profil de la came (15) et peut être déplacé au moyen de son dispositif dans la position intérieure de l'arbre (1) dans la position qui correspond à la position de la came dans la partie (2).

15. Dispositif selon la revendication 10, **caractérisé en ce que** le dispositif servant à supprimer le jeu d'assemblage (6) entre la pièce (2) et l'arbre (1) et le dispositif (10) qui sert également pour faire tourner la pièce, qui est montée sur l'arbre, pour l'amener dans la position angulaire prévue.
